# EUROPEAN PATENT APPLICATION

(11) **EP 4 682 129 A1**
(43) Date of publication of application: **21.01.2026**
(21) Application number: 24714026.2
(22) Date of filing: 12.03.2024
(51) Int. Cl.: C04B 28/02

(54) **CONCRETE FOR SECURITY ENCLOSURE AND SECURITY ENCLOSURE**

(30) Priority: 13.03.2023 ES 202330208
(71) Applicant: Gunnebo Safe Storage AB, 402 26 Göteborg (SE)
(72) Inventor: CAMACHO TORREGROSA, Esteban, 46005 Valencia (ES); LÓPEZ MARTÍNEZ, Juan Ángel, 46005 Valencia (ES); PAILLIER, Jérôme, 402 26 Göteborg (SE)
(74) Representative: Balder IP Law, S.L.
(86) International application number: PCT/IB2024/052391
(87) International publication number: WO 2024/189542

(57) **Abstract**

Concrete for security enclosure (1), the concrete comprising steel fibers, characterized in that the concrete contains more than 6% by volume of steel fibers, wherein the slenderness of the fibers is between 10 and 30. The invention also relates to security enclosures made with this concrete, such as safes or automated teller machines (ATMs).

## Description

### TECHNICAL FIELD

The present invention relates to concretes for security enclosures and to security enclosures which walls, or some of them, are made with this concrete.

### BACKGROUND

Steel fiber reinforced concrete exists for about 50 years. These fibers are like needles with a length/diameter ratio (slenderness) between 40 and 80, and the slenderer they are, the better they sew the concrete. However, the slenderer they are, the less amount can be added to the concrete. The fibers are used for traction, bending and compression ductility. The concretes with the highest fiber content are UHPC, with contents that usually ranging from 1.5% to 2.5% of its volume. If more than 3% is added, the fibers generate hedgehogs/balls and then it is unfeasible to place it.

In contrast, panels made of steel, wood, UHPC and other materials are used in the manufacture of safes, ATMs and the like to prevent burglars from breaking them quickly. The price and category of a safe depends on the time it takes to open a hole through it in a standardized test and in which the alleged burglar has a wide range of tools at his disposal. UHPC is good against impact, shock, fire, etc., but does not have a high strength against radial saw cutting. For this reason, some manufacturers currently add corundum aggregates to the mixture, almost as hard as diamond, and expensive.

### DESCRIPTION OF THE INVENTION

In order to overcome the drawbacks of the prior art, a first aspect of the present invention proposes a concrete for security enclosure, the concrete comprising steel fibers, characterized in that the concrete contains more than 6% by volume of steel fibers, wherein the slenderness of the fibers is between 10 and 30.

That is, the fibers have been used to give the concrete anti-cutting characteristics. In the current UHPC, which has approximately 2% of the volume (of slenderness 60 to 70, generally), they barely increase the cutting strength to the radial saw and in fact are added to resist bending.

If more steel fibers with that slenderness value are added, the concrete would not flow and balls would be generated during mixing. Therefore, according to the invention it is proposed to reduce the slenderness to a value between 10 and 30, such that the fibers remain acicular but no longer interact with each other, and behave as just another aggregate.

In this way, fiber contents of more than 6% by volume can be added (resulting in a concrete of about 470 kg/m³), a much higher value than usual. As will be seen below, when trying to cut the concrete according to the invention with a radial saw it takes much longer to make the cut and even for certain thicknesses, the disc breaks before completing the section.

Therefore, as a result of the invention, a concrete with cutting strength is obtained without the need to use corundum, and with a lower cost per m³. Corundum must be imported from abroad and its cost per ton is very high, while steel fiber is more accessible locally and more commonly used.

In some embodiments, the concrete has an aggregate size of less than 4 mm and a water/cement ratio between 0.15 and 0.35.

In some embodiments the concrete comprises less than 16% by volume of steel fibers.

In some embodiments, the steel of the fibers used has a yield strength equal to or greater than 1,500 MPa.

The invention also relates to a security enclosure comprising an enclosure, wherein the enclosure is partially formed by walls comprising concrete and steel fibers, characterized in that the concrete contains more than 6% by volume of steel fibers, wherein the slenderness of the fibers is between 10 and 30.

In some embodiments, the concrete of the security enclosure has an aggregate size of less than 4 mm and a water/cement ratio between 0.15 and 0.35.

In some embodiments the concrete security enclosure comprises less than 16% by volume of steel fibers.

In some embodiments, the concrete of the security enclosure has a yield strength equal to or greater than 1,500 MPa.

The security enclosure can be a safe, an ATM, or a strong room.

### BRIEF DESCRIPTION OF THE DRAWINGS

As a complement to the description, and for the purpose of helping to make the features of the invention more readily understandable, in accordance with practical exemplary embodiments of the invention, said description is accompanied by a set of figures which, by way of illustration and not limitation, represent the following:
Figure 1 shows two 49 cm² square section test specimens made of the concrete according to the invention.
Figure 2 shows four test specimens, after having cut them according to a cross section to calculate the time it takes to sever them with a radial saw.
Figure 3 shows the saw used together with a test specimen.
Figure 4 shows the test carried out with water.
Figure 5 shows the test carried out without water.
Figures 6 to 8 show the resulting notch after making the cut.
Figure 9 shows the cutting times, both for cutting with water and without water, as a function of the fiber content in the concrete.

### DESCRIPTION OF A PREFERRED EMBODIMENT OF THE INVENTION

In the description of the possible preferred embodiments of the invention, numerous details must be provided to better understand the invention. Even so, it will be apparent to the person skilled in the art that the invention can be implemented without these specific details. Furthermore, well-known features have not been described in detail to avoid unnecessarily complicating the description.

As shown in the figures, several test specimens Pr1, Pr2, Pr3, Pr4, Pr5, Pr6 have been prepared from concretes with varying fiber content and cured for one day with heat, in particular as shown in the following table:

| | Time to cut a square section of 49 cm2 (s) | |
|---|---|---|
| Fiber content by volume | With water | Without water |
| 0% | 17 | 12 |
| 2% | 25 | 16 |
| 4% | 35 | 20 |
| 6% | 46 | 23 |
| 8% | 70 | 70 |
| 10% | 98 | 120 |

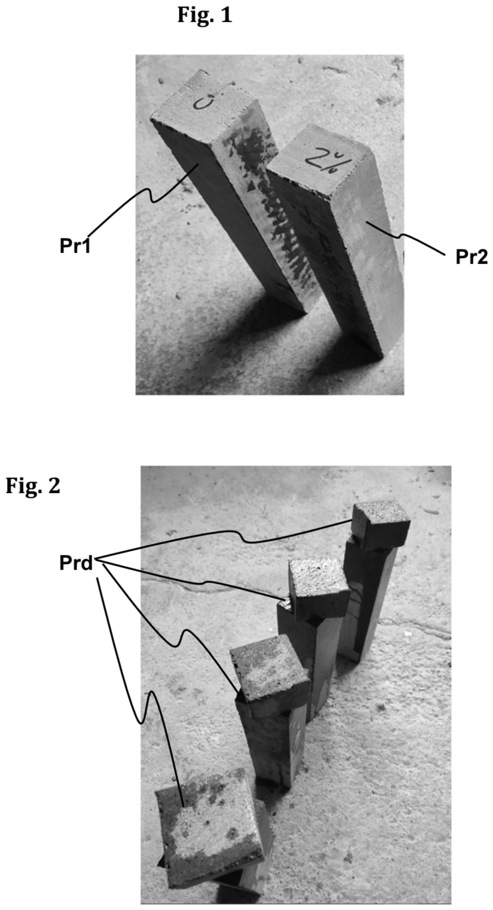

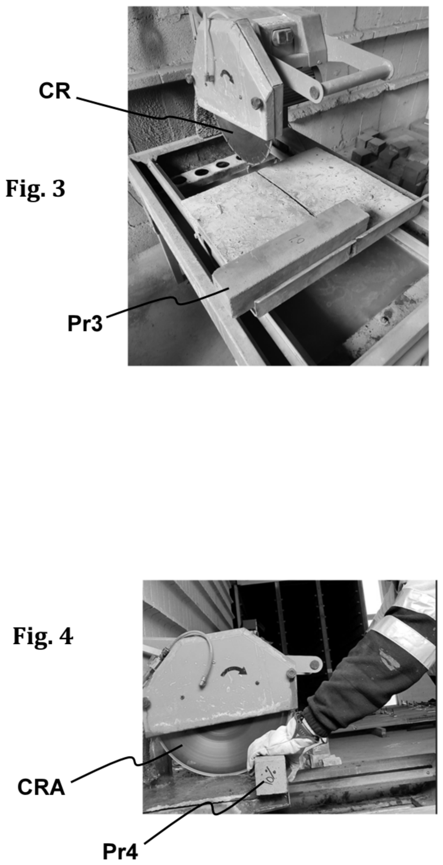

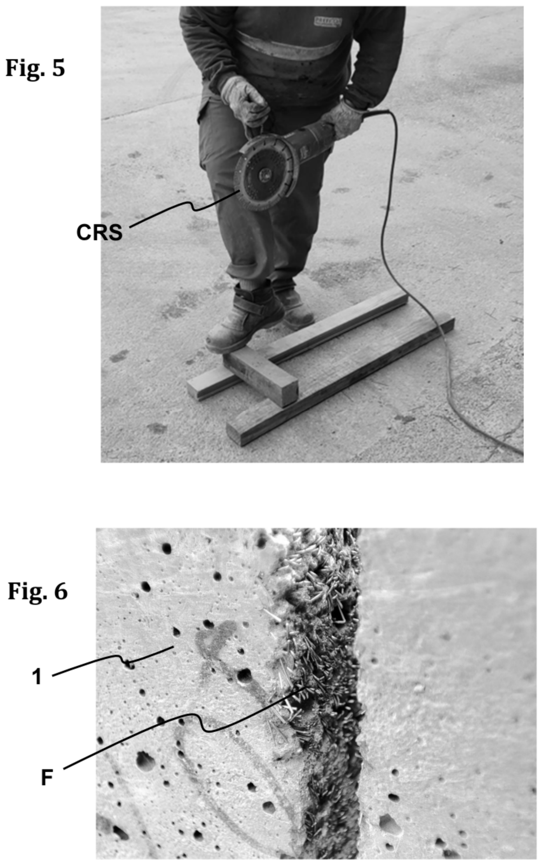

These test specimens **Pr1, Pr2, Pr3, Pr4, Pr5, Pr6** were subjected to two tests, a radial saw cutting test with water **CRA,** as shown in Figures 3 and 4, and a radial saw cutting test without water, as shown in Figure 5, measuring the time taken to completely sever the test specimens **Prd** and remain as shown in Figure 2.

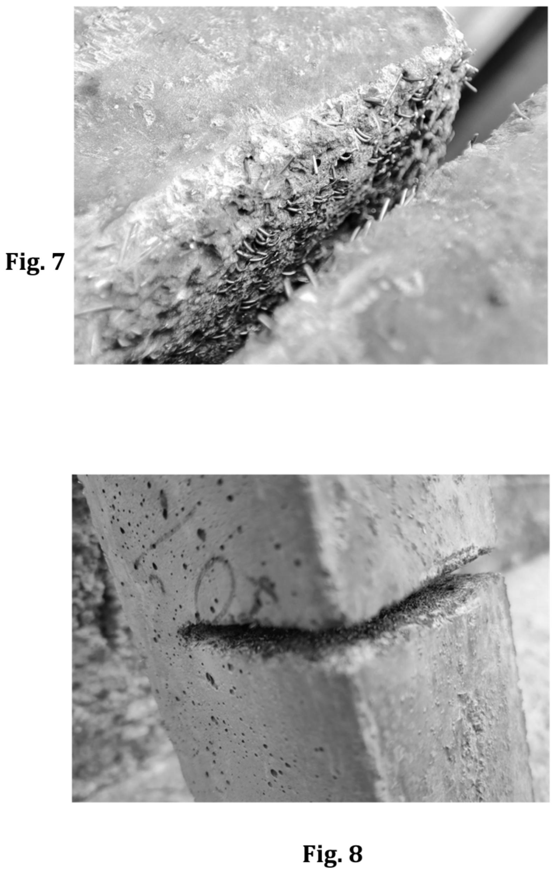

Figures 6 to 8 show how the test specimens looked after cutting them.

### Results

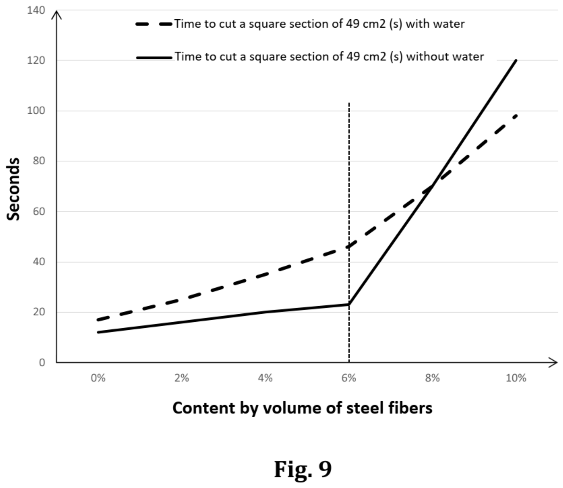

The results are shown in Figure 9 and turn out to be surprising. As mentioned in the background section, it is very unusual to provide concrete with an F-fiber content above 4%, for the reasons described there.

Those skilled in the art, starting from the known fiber concretes, would expect that as the fiber volume percentage increases, the time to make a cut would increase linearly. This can be seen in the sections of the curves for cutting with water and cutting without water in Figure 9.

In fact, the linear behavior extends up to a fiber content of 6%. But after that, something surprising happens: the cutting time starts to increase with a different slope, i.e. there is an inflection point in the behavior. In addition, it has been found that from 10% onwards, for the test specimens used in the tests, the discs of the radial saws break and no longer allow further cutting.

That is to say, the inventors have demonstrated in a practical and real way that the behavior from 6% onwards varies so much that it makes the use of steel viable (albeit always with the claimed slenderness) for the manufacture of security enclosures.

## Claims

1. Concrete for security enclosure (1), the concrete comprising steel fibers, **characterized in that** the concrete contains more than 6% by volume of steel fibers, wherein the slenderness of the fibers is between 10 and 30.

2. Concrete according to claim 1, having an aggregate size of less than 4 mm and a water/cement ratio between 0.15 and 0.35.

3. Concrete according to any of the preceding claims, comprising less than 16% by volume of steel fibers.

4. Concrete according to any of the preceding claims, wherein the steel of the fibers used has a yield strength equal to or greater than 1,500 MPa.

5. Security enclosure comprising an enclosure, wherein the enclosure is partially formed by walls (1) comprising concrete and steel fibers, **characterized in that** the concrete contains more than 6% by volume of steel fibers, wherein the slenderness of the fibers is between 10 and 30.

6. Security enclosure according to claim 4, wherein the concrete has an aggregate size of less than 4 mm and a water/cement ratio between 0.15 and 0.35.

7. Security enclosure according to any of claims 5 to 6, wherein the concrete comprises less than 16% by volume of steel fibers.

8. Security enclosure according to any of claims 5 to 7, wherein the steel used has a yield strength equal to or greater than 1,500 MPa.

9. Security enclosure according to any of claims 5 to 8, which is a safe, an automated teller machine or a strong room.
